# EUROPÄISCHE PATENTSCHRIFT

(11) **EP 3 278 186 B1**
(45) Veröffentlichungstag und Bekanntmachung des Hinweises auf die Patenterteilung: **28.07.2021**
(21) Anmeldenummer: 16729546.8
(22) Anmeldetag: 13.06.2016
(51) Int. Cl.: G05B 13/02, G05B 19/042, G05B 19/418

(54) **STEUEREINRICHTUNG FÜR EIN PRODUKTIONSMODUL, PRODUKTIONSMODUL MIT STEUEREINRICHTUNG SOWIE VERFAHREN ZUM BETREIBEN DER STEUEREINRICHTUNG**
CONTROL DEVICE FOR A PRODUCTION MODULE, PRODUCTION MODULE HAVING A CONTROL DEVICE, AND METHOD FOR OPERATING THE CONTROL DEVICE
DISPOSITIF DE COMMANDE D'UN MODULE DE PRODUCTION, MODULE DE PRODUCTION ÉQUIPÉ D'UN DISPOSITIF DE COMMANDE ET PROCÉDÉ DE FONCTIONNEMENT DU DISPOSITIF DE COMMANDE

(30) Priorität: 01.07.2015 DE 102015212264
(43) Veröffentlichungstag der Anmeldung: 07.02.2018
(73) Patentinhaber: Siemens Aktiengesellschaft, 80333 München (DE)
(72) Erfinder: FEITEN, Wendelin, 85579 Neubiberg (DE); HELD, Harald, 85461 Bockhorn (DE); STELZIG, Philipp Emanuel, 81825 München (DE); WURM, Kai, 81739 München (DE)
(86) Internationale Anmeldenummer: PCT/EP2016/063437
(87) Internationale Veröffentlichungsnummer: WO 2017/001173

(56) Entgegenhaltungen:
- US-A- 3 891 836
- US-A1- 2002 138 673

## Beschreibung

Zeitgemäße Produktionssysteme zur Herstellung oder Bearbeitung von technischen Produkten weisen in der Regel eine Vielzahl von spezifischen interagierenden Produktionsmodulen auf und werden zunehmend komplexer. An einem zu produzierenden oder zu bearbeitenden Produkt sind in der Regel eine Vielzahl von Bearbeitungs-, Produktions- oder Handhabungsschritten auszuführen, wofür im Produktionssystem eine Vielzahl von darauf spezialisierten Produktionsmodulen, wie z.B. Roboter, CNC-Maschinen, 3D-Drucker, Reaktoren, Brenner, Heizanlagen oder Förderbänder vorgesehen sind. Die spezifischen Funktionalitäten der Produktionsmodule werden auch als Produktionsservices bezeichnet.

Die Produktionsmodule werden durch Betriebseinstellungen, d.h. Einstellungen ihrer Betriebsparameter, an eine spezifische Produktionsumgebung und/oder an spezifische Produkte angepasst. Die Betriebseinstellungen sind hierbei in der Regel einer Vielzahl von Einschränkungen unterworfen, die bauartbedingt sein können oder aus einer Interaktion eines Produktionsmoduls mit einem Produkt oder mit einem anderen Produktionsmodul resultieren können. Insbesondere können nicht abgestimmte Betriebseinstellungen verschiedener Produktionsmodule zu Einstellungskonflikten führen.

Darüber hinaus kann es in einem durch die Einschränkungen zulässigen Bereich hinsichtlich eines Zwecks oder einer Performanz der Produktion mehr oder weniger günstige Betriebseinstellungen geben. Z.B. kann eine hohe Verarbeitungstemperatur zwar eine Bearbeitungsdauer verkürzen aber dadurch auch den Energieverbrauch erhöhen. Entsprechend kann ein schnellerer Produkttransport oder eine schnellere Produktübergabe zwar eine Produktionsdauer verkürzen, aber das Risiko erhöhen, das Produkt fallen zu lassen.

Dementsprechend wird häufig angestrebt, für die Produktionsmodule eines Produktionssystems Betriebseinstellungen zu ermitteln, die vorgegebene Einschränkungen erfüllen und für das Produktionssystem hinsichtlich vorgebbarer Kriterien insgesamt möglichst günstig sind oder zumindest eine akzeptable Annäherung an eine optimale Einstellung bilden.

Es ist bekannt, die Betriebseinstellungen von Produktionsmodulen zentral im Produktionssystem zu verwalten. In der Praxis werden hierbei geeignete konfliktvermeidende und optimierte Betriebseinstellungen häufig unter Mitwirkung von erfahrenen Einrichtern manuell ermittelt.

Aus dem Dokument US 3,891,836A ist bekannt, ein aus einer Vielzahl von Einheiten zusammengesetztes System mittels lokaler Computer zu steuern. Dabei ist zur systemweiten Optimierung und Koordination der lokalen Computer ein zentraler Planungscomputer vorgesehen.

Eine Änderung, ein Ausfall, ein Austausch oder ein Hinzufügen eines Produktionsmoduls im Produktionssystem oder auch produktbedingte Änderungen führen allerdings häufig dazu, dass sich für manche Betriebseinstellungen ihre optimalen Werte verschieben, neue oder geänderte Einschränkungen hinzukommen und/oder bestehende Einschränkungen wegfallen. Derartige Änderungen von Einschränkungen können insbesondere zu Konflikten verschiedener Betriebseinstellungen führen. Falls ein solcher Konflikt nicht unverzüglich aufgelöst wird, kann dies zu Ausfallzeiten für das Produktionssystem führen. Darüber hinaus kann eine Verschiebung der optimalen Werte von Betriebseinstellungen zu ungünstigen Produktionsbedingungen führen.

Es ist Aufgabe der vorliegenden Erfindung, eine Steuereinrichtung für ein Produktionsmodul, ein Produktionsmodul sowie ein Verfahren zum Betreiben der Steuereinrichtung anzugeben, die flexibel auf Änderungen im Produktionssystem reagieren können.

Gelöst wird diese Aufgabe durch eine Steuereinrichtung mit den Merkmalen des Patentanspruchs 1, durch ein Produktionsmodul mit den Merkmalen des Patentanspruchs 13, durch ein Verfahren mit den Merkmalen des Patentanspruchs 14, durch ein Computerprogrammprodukt mit den Merkmalen des Patentanspruchs 15 sowie durch ein computerlesbares Speichermedium mit den Merkmalen des Patentanspruchs 16.

Erfindungsgemäß sind eine Steuereinrichtung für ein Produktionsmodul zum Bearbeiten oder Handhaben eines Produktes in einem eine Vielzahl von Produktionsmodulen aufweisenden Produktionssystem, ein Produktionsmodul sowie ein Verfahren zum Betreiben der Steuereinrichtung vorgesehen.

Ein Produkt kann hierbei z.B. ein Werkstück oder ein beliebiges anderes Produkt in verschiedenen Phasen eines Fertigungs, Bearbeitungs- oder Verarbeitungsprozesses sein und insbesondere auch ein Ausgangs-, Zwischen- oder Endprodukt. Das Produktionsmodul kann insbesondere eine zur Produktion, Bearbeitung, Verarbeitung und/oder Handhabung eines Produkts beitragende Vorrichtung eines Produktionssystems mit spezifischer Funktionalität sein, z.B. ein Roboter, eine CNC-Maschine, ein 3D-Drucker, ein Reaktion, ein Brenner, eine Heizanlage, ein Förderband oder ein anderes Transportmodul.

Die erfindungsgemäße Steuereinrichtung verfügt über einen Datenspeicher zum Speichern von Betriebseinstellungen der Produktionsmodule sowie von Einschränkungen, die von zumindest einem Teil der Betriebseinstellungen einzuhalten sind. Derartige Einschränkungen werden häufig auch als Constraints bezeichnet. Weiterhin ist ein Einstellungsverwaltungsmodul vorgesehen zum Ermitteln, von welcher externen Betriebseinstellung eines benachbarten Produktionsmoduls eine lokale Betriebseinstellung des Produktionsmoduls aufgrund einer gemeinsamen Einschränkung abhängig ist. Die Steuereinrichtung verfügt ferner über ein Optimierungsmodul mit einer die lokale Betriebseinstellung bewertenden, lokalen Bewertungsfunktion und mit einer eine Nichteinhaltung der gemeinsamen Einschränkung bewertenden, weiteren Bewertungsfunktion. Das Optimierungsmodul ist eingerichtet zum Ermitteln einer optimierten lokalen Betriebseinstellung durch Optimieren der lokalen Bewertungsfunktion, durch Einlesen der ermittelten externen Betriebseinstellung und durch Optimieren der weiteren Bewertungsfunktion abhängig von der eingelesenen externen Betriebseinstellung. Der Begriff Optimierung soll hier auch den Fall umfassen, dass sich die jeweilige zu optimierende Größe einem Optimum annähert. Weiterhin weist die Steuereinrichtung ein Steuermodul auf zum Einstellen der optimierten lokalen Betriebseinstellung im Produktionsmodul.

Das erfindungsgemäße Produktionsmodul umfasst die erfindungsgemäße Steuereinrichtung.

Die durch die erfindungsgemäße Steuereinrichtung auszuführenden Verfahrensschritte sind Gegenstand des erfindungsgemäßen Verfahrens.

Ein wesentlicher Vorteil der Erfindung ist darin zu sehen, dass Betriebseinstellungen, die sowohl Einschränkungen des Produktionssystems genügen als auch hinsichtlich von vorgegebenen Bewertungsfunktionen optimiert sind, jeweils lokal durch ein jeweiliges Produktionsmodul ermittelt werden können. Hierzu ist lediglich eine lokale Kommunikation zwischen benachbarten Produktionsmodulen erforderlich. Insbesondere kann ein jeweiliges Produktionsmodul bei Änderungen im Produktionssystem, z.B. Hinzufügen oder Entfernen eines anderen Produktionsmoduls, in Kooperation mit benachbarten Produktionsmodulen für das geänderte Produktionssystem optimierte Betriebseinstellungen lokal ermitteln. Eine zentrale Verwaltung ist hierfür in vielen Fällen nicht erforderlich. Auf diese Weise kann ein Aufwand für eine Einrichtung oder eine Änderung des Produktionssystems häufig erheblich verringert werden.

Vorteilhafte Ausführungsformen und Weiterbildungen der Erfindung sind in den abhängigen Ansprüchen angegeben.

Vorzugsweise kann das Optimierungsmodul dazu eingerichtet sein die Optimierung der lokalen Bewertungsfunktion, das Einlesen der ermittelten externen Betriebseinstellung sowie die Optimierung der weiteren Bewertungsfunktion in einer diese Schritte umfassenden Schleife zu wiederholen. Bei einem jeweiligen Schleifendurchlauf kann ein lokales Abbruchkriterium geprüft werden, um infolge einer Erfüllung des Abbruchkriteriums die Schleife zu verlassen. Das Abbruchkriterium kann hierbei insbesondere einen Schwellenwert für die Nichteinhaltung der gemeinsamen Einschränkung umfassen. Auf diese Weise können bei einem jeweiligen Schleifendurchlauf abwechselnd Betriebseinstellungen lokal optimiert und ein Maß für die Nichteinhaltung von gemeinsamen Einschränkungen verringert werden. Dieses sukzessive Optimierungsverfahren ist in der Regel konvergent und führt zu Betriebseinstellungen, die sowohl gemeinsame Einschränkungen einhalten als auch hinsichtlich eines vorgebbaren Kriteriums optimiert sind.

Weiterhin kann das Optimierungsmodul dazu eingerichtet sein, die optimierte lokale Betriebseinstellung an das benachbarte Produktionsmodul weiterzuleiten. Die Weiterleitung kann als zusätzlicher Schritt innerhalb in der Schleife ausgeführt werden, um so jeweils eine aktuelle, teiloptimierte Betriebseinstellung weiterzuleiten.

Insbesondere kann das Optimierungsmodul dazu eingerichtet sein, die Ermittlung der optimierten lokalen Betriebseinstellung parallel zu einer korrespondierenden Ermittlung lokaler Betriebseinstellungen durch das benachbarte Produktionsmodul durchzuführen. Hierbei können fortlaufend lokale Betriebseinstellungen einer aktuellen Optimierungsphase, insbesondere aktuelle teiloptimierte Betriebseinstellungen mit dem benachbarten Produktionsmodul ausgetauscht werden. Auf diese Weise können die Betriebseinstellungen einer Vielzahl von Produktionsmodulen dezentral mittels lokaler Kommunikation zwischen benachbarten Produktionsmodulen optimiert werden.

Vorzugsweise kann der Datenspeicher dazu eingerichtet sein, eine jeweilige Betriebseinstellung oder Einschränkung mit einer Kennung zum Identifizieren dieser Betriebseinstellung oder Einschränkung sowie mit einer Wertangabe, Bereichsangabe und/oder Vergleichsangabe zum Angeben dieser Betriebseinstellung oder Einschränkung zu speichern.

Nach einer vorteilhaften Ausführungsform kann das Einstellungsverwaltungsmodul dazu eingerichtet sein, durch Interaktion des Produktionsmoduls mit einem Produkt und/oder mit einem benachbarten Produktionsmodul bedingte Einschränkungen spezifisch zu erfassen und als interaktionsbedingte Einschränkungen im Datenspeicher zu speichern.

Nach einer vorteilhaften Weiterbildung der Erfindung kann das Einstellungsverwaltungsmodul dazu eingerichtet sein, ein Produkt und/oder ein benachbartes Produktionsmodul dynamisch zu detektieren, infolge einer solchen Detektion eine Änderungsinformation zu generieren und die Änderungsinformation an das Optimierungsmodul und/oder an ein benachbartes Produktionsmodul zu übermitteln.

Dabei kann das Einstellungsverwaltungsmodul dazu eingerichtet sein, infolge der Detektion eine Erfassung von durch Interaktion des Produktionsmoduls mit dem Produkt und/oder mit dem benachbarten Produktionsmodul bedingten Einschränkungen zu veranlassen.

Entsprechend kann das Optimierungsmodul dazu eingerichtet sein, infolge eines Empfangs einer Änderungsinformation die Optimierung der lokalen Bewertungsfunktion, das Einlesen der ermittelten externen Betriebseinstellung und/oder die Optimierung der weiteren Bewertungsfunktion auszuführen.

Auf diese Weise kann das Produktionsmodul automatisch auf Änderungen bei Produkten oder bei benachbarten Produktionsmodulen reagieren und die Betriebseinstellungen neu auf die geänderten Bedingungen hin optimieren. Eine manuelle Neukonfiguration kann dann in vielen Fällen entfallen.

Weiterhin können die lokale Bewertungsfunktion und die weitere Bewertungsfunktion mittels einer gemeinsamen Bewertungsfunktion implementiert sein. Letztere kann dann mit einem veränderlichen Gewicht für die Bewertung der Nichteinhaltung der gemeinsamen Einschränkung aufrufbar sein. Dies erlaubt in vielen Fällen eine vereinfachte und flexiblere Implementierung.

Insbesondere kann das Optimierungsmodul dazu eingerichtet sein, aufeinanderfolgende Optimierungen der weiteren Bewertungsfunktion mit einem ansteigenden Gewicht für die Bewertung der Nichteinhaltung der gemeinsamen Einschränkung auszuführen. Auf diese Weise kann in der Regel erreicht werden, dass die gemeinsame Einschränkung sukzessive genauer eingehalten wird.

Ein Ausführungsbeispiel der Erfindung wird nachfolgend anhand der Zeichnung näher erläutert. Dabei zeigen jeweils in schematischer Darstellung:
- Figur 1: ein Produktionsmodul mit einer erfindungsgemäßen Steuereinrichtung im Zusammenwirken mit einem benachbarten Produktionsmodul und
- Figur 2: benachbarte Produktionsmodule beim Abgleich von Betriebseinstellungen und interaktionsbedingten Einschränkungen.

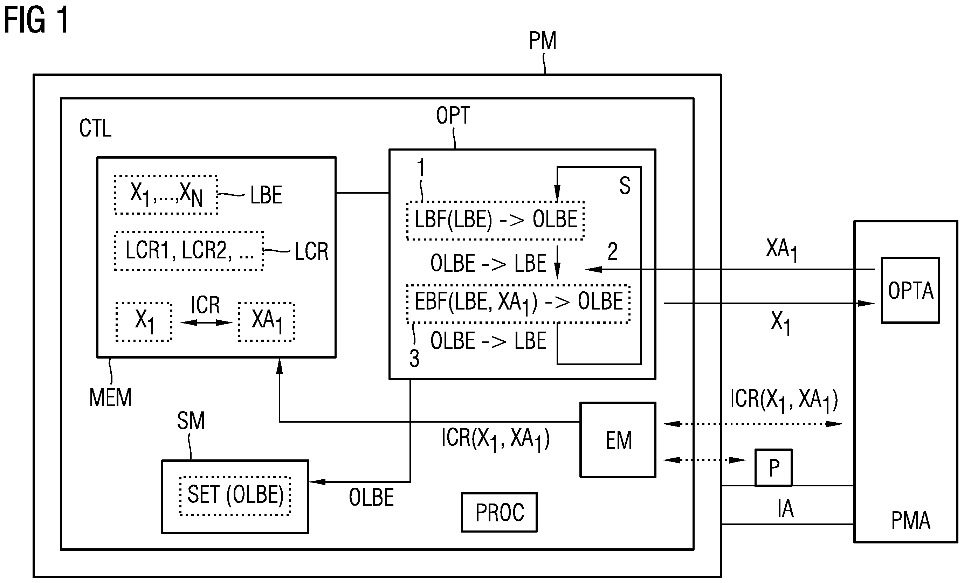

Figur 1 veranschaulicht ein Produktionsmodul PM mit einer erfindungsgemäßen Steuereinrichtung CTL im Zusammenwirken mit einem benachbarten Produktionsmodul PMA. Die Produktionsmodule PM und PMA sind Teil eines Produktionssystems und dienen zum Bearbeiten oder Handhaben eines Produkts P im Produktionssystem. Ein solches Produktionssystem, z.B. eine Fertigungsanlage zur Herstellung, Bearbeitung oder Verarbeitung von Werkstücken oder anderen Produkten weist in der Regel eine Vielzahl von interagierenden Produktionsmodulen mit spezifischer Funktionalität auf. Das Produkt P kann ein Werkstück oder allgemein ein beliebiges, insbesondere körperliches Produkt in verschiedenen Phasen eines Fertigungs-, Bearbeitungsoder Verarbeitungsprozesses, insbesondere auch ein Ausgangs-, Zwischen- oder Endprodukt sein. Die zueinander benachbarten Produktionsmodule PM und PMA können im Produktionssystem räumlich oder logisch benachbart sein. Insbesondere können die Produktionsmodule PM und PMA auch mit anderen Produktionsmodulen des Produktionssystems interagieren und in diesem Sinne auch zu anderen Produktionsmodulen benachbart sein.

Die Produktionsmodule PM und PMA können jeweils eine zur Produktion, Bearbeitung, Verarbeitung und/oder Handhabung des Produkts beitragende Vorrichtung des Produktionssystems mit spezifischer Funktionalität sein, z.B. jeweils ein Roboter, eine CNC-Maschine, ein 3D-Drucker, ein Reaktor, ein Brenner, eine Heizanlage oder ein Förderband oder ein anderes Transportmodul. Insbesondere kann ein jeweiliges Produktionsmodul PM oder PMA ein sogenanntes Cyber Physical Module (CPM) oder Cyber Physical Production Module (CPPM) sein.

Das Produktionsmodul PM interagiert mit dem benachbarten Produktionsmodul PMA in einem Interaktionsbereich IA. Eine jeweilige Interaktion kann sich hierbei auch auf im Interaktionsbereich IA befindliche Produkte, hier das Produkt P, erstrecken. Der Interaktionsbereich IA ist ein räumlicher oder logischer Bereich, der mehreren Produktionsmodulen zugänglich ist oder von mehreren Produktionsmodulen beeinflusst werden kann, z.B. ein Übergabebereich zwischen einem Roboterarm und einem Förderband oder zwischen zwei Roboterarmen. In solchen Interaktionsbereichen, hier IA, ist in der Regel eine Abstimmung von Bewegungen oder anderen Betriebseinstellungen der dort interagierenden Produktionsmodule erforderlich. Insbesondere werden in der Regel ein Bewegungsspielraum oder ein Spielraum einer anderen Betriebseinstellung eines Produktionsmoduls durch die Interaktion mit einem benachbarten Produktionsmodul eingeschränkt. Solche zunächst lokal auftretenden Einschränkungen können sich häufig auch auf nicht unmittelbar benachbarte Produktionsmodule des Produktionssystems auswirken, insofern ein Produktionsmodul häufig mit mehreren benachbarten Produktionsmodulen interagiert. Eine Interaktion mit einem ersten der benachbarten Produktionsmodule kann demnach Einschränkungen unterworfen sein, die aus Einschränkungen einer Interaktion mit einem zweiten der benachbarten Produktionsmodule resultieren. Es wird deshalb angestrebt, ausgehend von einer Menge einzelner Einschränkungen eine Menge von Betriebseinstellungen zu ermitteln, die möglichst allen Einschränkungen von Produktionsmodulen des Produktionssystems genügen. Darüber hinaus wird angestrebt, die Betriebseinstellungen innerhalb der durch die Einschränkungen vorgegebenen Grenzen so zu bestimmen, dass sich eine oder mehrere Wirkungen dieser Betriebseinstellungen hinsichtlich vorgegebener Kriterien verbessern. Derartige Kriterien können z.B. eine Performanz des Produktionssystems oder einen Ressourcenverbrauch betreffen.

Unter einer Betriebseinstellung im obigen Sinne kann eine Einstellung von Betriebsparametern und/oder Betriebseigenschaften eines Produktionsmoduls verstanden werden, insbesondere eine Einstellung von physikalischen Parametern, Steuergrößen, Regelungsgrößen und/oder Prozessvariablen. Derartige Betriebseigenschaften oder Betriebsparameter können z.B. eine Geschwindigkeit, eine Beschleunigung, eine Position und/oder eine Orientierung eines Produkts oder einer Handhabungsvorrichtung eines Produktionsmoduls sein. Auch Betriebsparameter, wie z.B. Abmessungen, Druck, Temperatur etc. eines Interaktionsbereiches oder Spannung, Strom, Drehzahl und/oder Ressourcenverbrauch von Teilsystemen eines Produktionsmoduls können als Betriebseinstellungen aufgefasst werden. Derartige Betriebseinstellungen werden durch ein Produktionsmodul vorzugsweise jeweils als Datensatz mit einer Wertangabe und einer zugeordneten, die Betriebseinstellung identifizierenden Kennung verwaltet.

Eine Einschränkung im obigen Sinne stellt eine für eine jeweilige Betriebseinstellung einzuhaltende Betriebseinschränkung dar, z.B. eine Wertangabe, eine Bereichsangabe oder eine Vergleichsangabe für physikalische oder logische Größen oder eine physikalische oder logische Nebenbedingung. Eine solche Einschränkung kann beispielsweise durch eine Gleichung oder Ungleichung repräsentiert oder modelliert werden. So kann für eine Betriebseinstellung einer Geschwindigkeit z.B. ein zulässiger Geschwindigkeitsbereich oder ein Geschwindigkeitswert als Einschränkung vorgegeben werden. Daneben kann als Einschränkung z.B. gefordert werden, dass eine Geschwindigkeit eines Roboterarms und eine Geschwindigkeit eines Förderbands bei einer Produktübergabe im wesentlichen gleich sein oder sich höchstens um einen Toleranzwert unterscheiden.

Im Allgemeinen lassen sich Einschränkungen hinsichtlich ihrer Ursache unterscheiden. So gibt es zum Einen durch ein jeweiliges Produktionsmodul selbst bedingte Einschränkungen. Dies können insbesondere bauartbedingte Einschränkungen, wie z.B. Mindestgeschwindigkeit oder Höchstgeschwindigkeit eines Förderbands sein.

Zum Anderen gibt es durch Interaktion eines jeweiligen Produktionsmoduls mit einem jeweiligen Produkt bedingte Einschränkungen. Diese sind in der Regel für ein Produkt spezifisch und in einem Modell eines Produktionsprozesses für das Produkt enthalten. So ist z.B. beim Transport einer schon gefüllten aber noch nicht verschlossenen Flasche darauf zu achten, dass die Flasche im Wesentlichen senkrecht gehalten wird und dass eine Obergrenze bei ihrer Beschleunigung eingehalten wird.

Darüber hinaus gibt es Einschränkungen, die durch Interaktion zwischen zwei oder mehreren Produktionsmodulen bedingt sind. So sollten z.B. bei einer Übergabe von Produkten zwischen zwei Produktionsmodulen in der Regel die Geschwindigkeiten der Handhabungsvorrichtungen beim abgebenden und beim annehmenden Produktionsmodul im Wesentlichen gleich sein.

Ferner gibt es Einschränkungen, die durch das Produktionssystem oder durch eine Umgebung des Produktionsmoduls bedingt sind, z.B. eine Obergrenze für einen Stromverbrauch des gesamten Produktionssystems.

Insofern sich die Betriebseinstellungen von benachbarten Produktionsmodulen gegenseitig beeinflussen, sind die Einschränkungen benachbarter Produktionsmodule miteinander verknüpft und beeinflussen sich demnach gegenseitig. Damit können sich die Einschränkungen eines Produktionsmoduls auch mittelbar auf die Einschränkungen nicht direkt benachbarter Produktionsmodule auswirken, potentiell über das ganze Produktionssystem hinweg. Derartige Einschränkungen werden durch das Produktionsmodul vorzugsweise als Datensätze mit Kennungen zum Identifizieren der betroffenen Betriebseinstellungen sowie der zugrundeliegenden Nebenbedingungen verwaltet. Die Datensätze können z.B. Gleichungen oder Ungleichungen mit Wertangaben, Bereichsangaben und/oder Vergleichsangaben für Betriebseinstellungen oder andere physikalische oder logische Größen umfassen. Hierdurch ist insbesondere eine jeweilige Einschränkung der oder den dadurch eingeschränkten Betriebseinstellungen zugeordnet.

Unter einer gemeinsamen Einschränkung sei in diesem Zusammenhang eine Einschränkung verstanden, die verschiedene Betriebseinstellungen insbesondere verschiedener Produktionsmodule verknüpft, z.B. in Form einer Gleichung bzw. Ungleichung wie X₁ = Y₂ bzw. X₁ < Y₂, was bedeuten soll, dass eine Betriebseinstellung X₁ gleich bzw. kleiner als eine Betriebseinstellung Y₂ sein soll.

Um eine Einhaltung einer Einschränkung zu bewerten, wird vorzugsweise ein nummerisches Maß für die Nichteinhaltung der Einschränkung vorgegeben. Bei einer die Gleichheit zweier Betriebseinstellungen fordernden Einschränkung X₁ = Y₂ kann beispielsweise das Quadrat der Differenz beider Betriebseinstellungen (X₁ - Y₂)² als nummerisches Maß für die Nichteinhaltung dieser Einschränkung verwendet werden. Alternativ oder zusätzlich kann auch ein Absolutbetrag der Differenz verwendet werden.

Im vorliegenden Ausführungsbeispiel weist auch das Produktionsmodul PMA sowie andere Produktionsmodule des Produktionssystems eine der Steuereinrichtung CTL des Produktionsmoduls PM entsprechende Steuereinrichtung (nicht dargestellt) auf.

Zum Ausführen aller erfindungsgemäßen Verfahrensschritte verfügt die Steuereinrichtung CTL über einen Prozessor PROC.

Weiterhin weist die Steuereinrichtung CTL einen Datenspeicher MEM auf zum Speichern von Betriebseinstellungen der Produktionsmodule, hier PM und PMA, sowie zum Speichern von Einschränkungen, die von zumindest einem Teil dieser Betriebseinstellungen einzuhalten sind.

Im vorliegenden Ausführungsbeispiel speichert der Datenspeicher MEM einen Satz LBE von lokalen Betriebseinstellungen X₁, ..., X_{N} des Produktionsmoduls PM. Weiterhin ist ein Satz LCR von lokalen Einschränkungen LCR1, LCR2, ... gespeichert. Die lokalen Einschränkungen LCR1, LCR2, ... betreffen durch das Produktionsmodul PM selbst bedingte, z.B. bauartbedingte Einschränkungen. Darüber hinaus wird im Datenspeicher MEM eine interaktionsbedingte Einschränkung ICR gespeichert. Diese setzt die lokale Betriebseinstellung X₁ des Produktionsmoduls PM mit einer Betriebseinstellung XA₁ des Produktionsmoduls PMA in Beziehung, z.B. in Form einer Nebenbedingung wie X₁ < XA₁. Hierbei kann z.B. X₁ eine Geschwindigkeit eines Förderbands des Produktionsmoduls PM bezeichnen und XA₁ eine Geschwindigkeit eines Roboterarms des Produktionsmoduls PMA. In diesem Fall besagt die vorstehende Nebenbedingung, dass die Geschwindigkeit des Förderbands kleiner als die Geschwindigkeit des Roboterarms sein soll.

Die Betriebseinstellung XA₁ ist bezogen auf das Produktionsmodul PMA eine lokale Betriebseinstellung dieses Produktionsmoduls. Derartige lokale Betriebseinstellungen des Produktionsmoduls PMA werden in Bezug auf das Produktionsmodul PM im Folgenden als externe Betriebseinstellungen bezeichnet. Insofern die interaktionsbedingte Einschränkung ICR verschiedene Betriebseinstellungen verschiedener Produktionsmodule betrifft, kann sie als gemeinsame Einschränkung der Betriebseinstellungen X₁ und XA₁ im obigen Sinne aufgefasst werden.

Insofern Einschränkungen verschiedener Produktionsmodule ihrerseits voneinander abhängig sein können, kann der Datenspeicher MEM neben Einschränkungen bezüglich unmittelbar benachbarter Produktionsmodule auch Einschränkungen für mittelbar benachbarte Produktionsmodule, also insbesondere auch nichtlokale oder globale Einschränkungen enthalten.

Weiterhin verfügt die Steuereinrichtung CTL über ein Einstellungsverwaltungsmodul EM zum Prüfen, ob und welche externe Betriebseinstellungen eines benachbarten Produktionsmoduls, hier PMA, von lokalen Betriebseinstellungen des Produktionsmoduls PM über eine gemeinsame Einschränkung abhängig sind, d.h. die gleiche gemeinsame Einschränkung betreffen. Zu diesem Zweck detektiert das Einstellungsverwaltungsmodul EM - wie in Figur 1 durch punktierte Doppelpfeile angedeutet - das benachbarte Produktionsmodul PMA sowie das im Interaktionsbereich IA befindliche Produkt P dynamisch. Im Zusammenhang mit der Detektion des benachbarten Produktionsmoduls PMA ermittelt das Einstellungsverwaltungsmodul EM, dass die interaktionsbedingte Einschränkung ICR existiert, die die lokale Betriebseinstellung X₁ mit der externen Betriebseinstellung XA₁ verknüpft. Infolgedessen wird die interaktionsbedingte Einschränkung ICR(X₁, XA₁) durch das Einstellungsverwaltungsmodul EM erfasst und als Einschränkungsdatensatz im Datenspeicher MEM gespeichert.

Die Steuereinrichtung CTL weist ferner ein mit dem Datenspeicher MEM gekoppeltes Optimierungsmodul OPT auf. Letzteres implementiert eine die lokalen Betriebseinstellungen LBE bewertende lokale Bewertungsfunktion LBF sowie eine eine Nichteinhaltung einer gemeinsamen Einschränkung, hier ICR, bewertende, weitere Bewertungsfunktion EBF. Das Optimierungsmodul OPT dient zum Ermitteln von optimierten lokalen Betriebseinstellungen OLBE, die sowohl lokalen und gemeinsamen Einschränkungen weitgehend genügen als auch im Rahmen dieser Einschränkungen hinsichtlich vorgegebener Kriterien optimiert sind.

Die lokale Bewertungsfunktion LBF bewertet die lokalen Betriebseinstellungen LBE nach lokalen, d.h. das Produktionsmodul PM betreffenden Kriterien. Diese lokalen Kriterien umfassen insbesondere die lokalen Einschränkungen LCR. Die Abhängigkeit der lokalen Bewertungsfunktion LBF von den lokalen Einschränkungen LCR ist in Figur 1 aus Übersichtlichkeitsgründen nicht dargestellt.

Die weitere Bewertungsfunktion EBF bewertet als Funktion der lokalen Betriebseinstellungen LBE und der externen Betriebseinstellung XA₁ insbesondere die Nichteinhaltung der interaktionsbedingten Einschränkung ICR. Die vorhandene Abhängigkeit der weiteren Bewertungsfunktion EBF von der interaktionsbedingten Einschränkung ICR sowie ggf. von den lokalen Einschränkungen LCR ist in Figur 1 aus Übersichtlichkeitsgründen nicht dargestellt. Zur Bewertung der Nichteinhaltung der interaktionsbedingten Einschränkung ICR kann z.B. ein Quadrat der Abweichung der lokalen Betriebseinstellung X₁ von der externen Betriebseinstellung XA₁ als Summand in die weitere Bewertungsfunktion EBF eingehen.

Derartige Bewertungsfunktionen, hier LBF und EBF, werden im Rahmen von Optimierungsverfahren häufig auch als Kostenfunktionen bezeichnet.

Die Bewertungsfunktionen LBF und EBF werden mittels bekannter Optimierungsverfahren optimiert. Unter einem Optimieren einer Bewertungsfunktion bzw. der darin eingehenden Betriebseinstellungen sei verstanden, dass die Betriebseinstellungen so bestimmt werden, dass sich eine oder mehrere Wirkungen dieser Betriebseinstellungen hinsichtlich vorgegebener Kriterien verbessern, d.h. dass sich diese Wirkungen einem besonders günstigen Optimum hinsichtlich einer vorgegebenen Metrik annähern. Eine solche Metrik wird durch die von den zu optimierenden Betriebseinstellungen abhängigen Bewertungsfunktionen implementiert. Die zu optimierenden Betriebseinstellungen werden dann so variiert, dass die davon abhängige Bewertungsfunktion optimiert wird, d.h., dass diese Bewertungsfunktion kleiner oder möglichst klein bzw. größer oder möglichst groß wird. Zur Lösung derartiger Optimierungsaufgaben sind eine Vielzahl von Lösungsverfahren bekannt, wie z.B. Minimierungsverfahren, Simplexverfahren, Gradientenverfahren etc. Einschränkungen in Form von Nebenbedingungen können in vielen derartigen Optimierungsverfahren mittels sogenannter Lagrange-Multiplikatoren berücksichtigt werden.

Das Produktionsmodul PMA verfügt über ein dem Optimierungsmodul OPT entsprechendes Optimierungsmodul OPTA.

Zur Optimierung der lokalen Betriebseinstellung LBE führt das Optimierungsmodul OPT eine Schleife S über Verfahrensschritte 1, 2 und 3 aus. Im Verfahrensschritt 1 wird die lokale Bewertungsfunktion LBF mittels Standardoptimierungsverfahren optimiert, so dass die lokale Bewertungsfunktion LBF z.B. minimal wird. Wie oben bereits erwähnt, können die lokalen Einschränkungen LCR mittels Lagrange-Multiplikatoren berücksichtigt werden. Als Ergebnis der Optimierung der lokalen Bewertungsfunktion LBF resultieren die lokal optimierten Betriebseinstellungen OLBE. Diese werden im Datenspeicher MEM als lokale Betriebseinstellungen LBE gespeichert, d.h. die dort gespeicherten lokalen Betriebseinstellungen LBE werden durch die im Verfahrensschritt 1 optimierten Betriebseinstellungen OLBE ersetzt und mithin aktualisiert.

Im Verfahrensschritt 2 wird ein aktueller, vom Produktionsmodul PMA stammender Wert der externen Betriebseinstellung XA₁ eingelesen. Vorzugsweise ist dies ein aktueller, in einem korrespondierenden Optimierungsverfahren des Produktionsmoduls PMA optimierter oder teiloptimierter Wert.

Im Verfahrensschritt 3 wird die weitere Bewertungsfunktion EBF abhängig von der eingelesenen externen Betriebseinstellung XA₁ unter Berücksichtigung sowohl der lokalen Einschränkungen LCR als auch der interaktionsbedingten Einschränkung ICR optimiert. In der weiteren Bewertungsfunktion EBF wird die interaktionsbedingte Einschränkung ICR als wesentliches, hauptsächliches oder alleiniges Optimierungskriterium verwendet. Auch bei dieser Optimierung können Standartoptimierungsverfahren verwendet werden, bei denen die interaktionsbedingte Einschränkung ICR und/oder die lokalen Einschränkungen LCR mittels Lagrange-Multiplikatoren berücksichtigt werden. Aus der Optimierung im Verfahrensschritt 3 resultieren wiederum optimierte lokale Betriebseinstellungen OLBE, mit denen die lokalen Betriebseinstellungen LBE im Datenspeicher MEM aktualisiert werden. Die im Verfahrensschritt 3 optimierten lokalen Betriebseinstellungen OLBE erfüllen die interaktionsbedingte Einschränkung ICR erheblich besser als vor der Optimierung. Als Teil des Verfahrensschrittes 3 wird die aktuell optimierte Betriebseinstellung X₁ aus den optimierten lokalen Betriebseinstellungen OBLE an das Optimierungsmodul OPTA des Produktionsmoduls PMA weitergeleitet.

Als Teil des Verfahrensschritts 3 wird weiterhin ein Abbruchkriterium für die Schleife S geprüft, z.B. ein Wert für die Nichteinhaltung der interaktionsbedingten Einschränkung ICR gemäß der Bewertungsfunktion EBF und/oder ein Wert für einen Abstand der lokalen Betriebseinstellungen LBE zu einem Optimum gemäß der lokalen Bewertungsfunktion LBF. Falls das Abbruchkriterium z.B. durch Vergleich mit einer Toleranzschwelle nicht erfüllt ist, wird ein erneuter Durchlauf der Schleife S veranlasst.

Vorzugsweise können die lokale Bewertungsfunktion LBF und die weitere Bewertungsfunktion EBF durch eine gemeinsame Bewertungsfunktion implementiert sein, wobei die unterschiedlichen Optimierungsziele der Bewertungsfunktionen LBF und EBF durch einen Aufruf mit unterschiedlichen Optimierungsgewichten realisiert sein kann. Insbesondere kann ein veränderliches Gewicht für die Bewertung der Nichteinhaltung der gemeinsamen Einschränkung, hier ICR, vorgesehen sein. So kann die gemeinsame Bewertungsfunktion als lokale Bewertungsfunktion LBF aufgerufen werden, wenn dieses veränderliche Gewicht im Wesentlichen auf 0 gesetzt wird und als weitere Bewertungsfunktion EBF, wenn das veränderliche Gewicht dem Zweck entsprechend erhöht wird. Vorzugsweise kann das veränderliche Gewicht bei aufeinanderfolgenden Durchläufen der Schleife S sukzessive erhöht werden, um die Einhaltung der interaktionsbedingten Einschränkung ICR sukzessive zu verbessern.

Sobald das Abbruchkriterium erfüllt ist, wird die Schleife S verlassen. Nach Verlassen der Schleife S werden die resultierenden lokal optimierten Betriebseinstellungen OLBE vom Optimierungsmodul OPT zu einem Steuermodul SM der Steuereinrichtung CTL übermittelt. Durch das Steuermodul SM werden schließlich die optimierten lokalen Betriebseinstellungen OLBE im Produktionsmodul PM eingestellt.

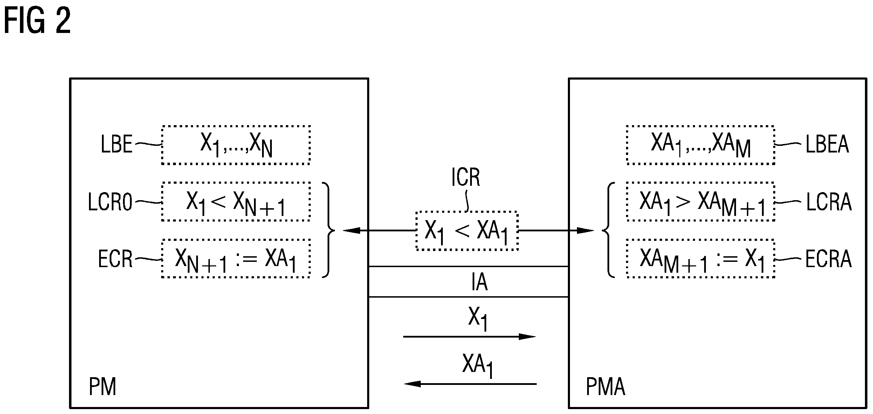

Figur 2 zeigt die benachbarten Produktionsmodule PM und PMA bei einem Abgleich von Betriebseinstellungen und interaktionsbedingten Einschränkungen. In Figur 2 bezeichnen Bezugszeichen, die mit in Figur 1 verwendeten Bezugszeichen übereinstimmen, dasselbe Objekt.

Entsprechend dem Satz LBE der lokalen Betriebseinstellungen X₁, ... X_{N} des Produktionsmoduls PM ist dem Produktionsmodul PMA ein korrespondierender Satz LBEA von lokalen Betriebseinstellungen XA₁, ..., XA_{N} des Produktionsmoduls PMA zugeordnet. Aus Sicht des Produktionsmoduls PM werden die Betriebseinstellungen LBEA als externe Betriebseinstellungen bezeichnet.

Es sei beispielhaft angenommen, dass die interaktionsbedingte Einschränkung ICR die Nebenbedingung X₁ < XA₁ umfasst. Die interaktionsbedingte Einschränkung ICR betrifft die Interaktion beider Produktionsmodule PM und PMA und wird durch einander entsprechende Einstellungsverwaltungsmodule (in Figur 2 nicht dargestellt) beider Produktionsmodule PM und PMA erfasst.

Anhand der erfassten interaktionsbedingten Einschränkung ICR wird durch das Produktionsmodul PM eine neue lokale Betriebseinstellung X_{N+1} erzeugt, die als lokale Stellvertretung für die externe Betriebseinstellung XA₁ verwaltet wird. Aus der interaktionsbedingten Einschränkung ICR wird auf diese Weise die Nebenbedingung X₁ < X_{N+1} als rein lokale Einschränkung LCR0 erzeugt. Die lokale Einschränkung LCR0 wird dem Satz LCR der lokalen Einschränkungen hinzugefügt und geht auf diese Weise auch in die Optimierung der lokalen Bewertungsfunktion LBF ein und wird mithin im Verfahrensschritt 1 als lokale Nebenbedingung berücksichtigt.

Weiterhin wird aus der interaktionsbedingten Einschränkung ICR durch das Produktionsmodul PM eine externe Einschränkung ECR erzeugt. Extern bedeutet in diesem Zusammenhang, dass eine lokale Betriebseinstellung, hier X₁, mit einer externen Betriebseinstellung, hier XA₁, verknüpft wird, hier als Nebenbedingung der Gleichheit beider Größen X_{N+1}:= XA₁. Die externe Einschränkung ECR geht als gemeinsame Einschränkung der Betriebseinstellungen X_{N+1} und XA₁ in die Optimierung der weiteren Bewertungsfunktion EBF ein und wird auf diese Weise als Nebenbedingung im Verfahrensschritt 3 berücksichtigt.

In analoger Weise erzeugt das Produktionsmodul PMA aus der interaktionsbedingten Einschränkung ICR eine neue für das Produktionsmodul PMA lokale Betriebseinstellung XA_{M+1} und verwaltet diese als lokale Stellvertretung für die Betriebseinstellung X₁ des Produktionsmoduls PM. Weiterhin wird aus der interaktionsbedingten Einschränkung ICR eine lokale Einschränkung LCRA mit der Nebenbedingung XA₁ > XA_{M+1} erzeugt sowie eine externe Einschränkung ECRA mit der Nebenbedingung XA_{M+1}:= X₁. Das Produktionsmodul PMA führt damit das gleiche Optimierungsverfahren durch wie das Produktionsmodul PA. Die Optimierungsverfahren im Produktionsmodul PM und im Produktionsmodul PMA werden vorzugsweise parallel zueinander unter fortlaufendem Austausch der in der Schleife S aktualisierten Betriebseinstellungen X₁ und XA₁ ausgeführt.

Vorzugsweise führen im Produktionssystem alle hierfür geeigneten Produktionsmodule dieses Optimierungsverfahren zumindest teilweise parallel aus, wobei die von gemeinsamen Einschränkungen betroffenen Betriebseinstellungen zwischen benachbarten Produktionsmodulen ausgetauscht werden.

Im Allgemeinen können auf diese Weise Betriebseinstellungen der Produktionsmodule des Produktionssystems ermittelt werden, die möglichst alle oder zumindest möglichst viele Einschränkungen erfüllen und insgesamt möglichst günstig sind. Durch die Ausführung der lokalen Optimierungen durch die einzelnen Produktionsmodule wird für das gesamte Produktionssystem eine Summe der lokalen Bewertungsfunktionen als Gesamtbewertungsfunktion für das Produktionssystem optimiert. Zu diesem Zweck kann sich eine Kommunikation zwischen Produktionsmodulen auf eine Kommunikation zwischen benachbarten Produktionsmodulen beschränken. Bei dieser Kommunikation werden durch jedes geeignete Produktionsmodul diejenigen Betriebseinstellungen der jeweils benachbarten Produktionsmodule ermittelt, über die gemeinsame Einschränkungen bestehen. Diese Betriebseinstellungen benachbarter Produktionsmodule werden im lokalen Datenspeicher gespeichert und können als lokale Betriebseinstellungen aufgefasst werden und entsprechend lokal optimiert werden. Nach einer solchen lokalen Optimierung ist zwar davon auszugehen, dass sich ein Wert der kopierten und lokal optimierten Betriebseinstellung vom ursprünglichen Wert dieser Betriebseinstellung im benachbarten Produktionsmodul unterscheidet, doch kann die Gleichheit von Kopie und ursprünglichem Wert auf einfache Weise als zusätzliche Nebenbedingung generiert werden. Ein wesentlicher Vorteil der Erfindung resultiert daraus, dass die so generierten Nebenbedingungen sehr einfach sind, während komplexere Nebenbedingungen durch rein lokale Optimierung berücksichtigt werden können.

Indem abwechselnd lokale Größen optimiert werden und Abweichungen zwischen kopierten und ursprünglichen Betriebseinstellungen optimiert werden, kann oft schon nach wenigen Schritten eine günstige Lösung gefunden werden, die gleichzeitig alle Einschränkungen der Betriebseinstellungen berücksichtigt. Auch das Erreichen einer Konvergenz des Verfahrens kann hierbei dezentral festgestellt werden.

Diese dezentrale Implementierung der Erfindung ist insofern vorteilhaft, als in der Regel keine Anpassung oder Konfiguration der Optimierungsverfahren erforderlich ist, wenn Produktionsmodule zum Produktionssystem hinzugefügt werden oder aus ihm entfernt werden. Ein weiterer Vorteil ist in einer Redundanz in der Berechnung und Speicherung der Betriebseinstellungen zu sehen. Falls in einem Produktionsmodul die lokal optimierten Betriebseinstellungen nicht rechtzeitig verfügbar sind, dann können ihre Werte aus benachbarten Produktionsmodulen übernommen werden.

## Patentansprüche

1. Steuereinrichtung (CTL) für jeweils ein Produktionsmodul (PM) zum Bearbeiten oder Handhaben eines Produkts (P) in einem eine Vielzahl von Produktionsmodulen (PM, PMA) aufweisenden Produktionssystem, mit
a) einem Datenspeicher (MEM) zum Speichern von Betriebseinstellungen (LBE) der Produktionsmodule (PM, PMA) sowie von Einschränkungen (LCR, ICR, ECR), die von zumindest einem Teil der Betriebseinstellungen einzuhalten sind,
b) einem Einstellungsverwaltungsmodul (EM) zum Ermitteln, von welcher externen Betriebseinstellung (XA₁) eines benachbarten Produktionsmoduls (PMA) eine lokale Betriebseinstellung (X₁) des Produktionsmoduls (PM) aufgrund einer gemeinsamen Einschränkung (ICR) abhängig ist,
c) einem Optimierungsmodul (OPT) mit einer die lokale Betriebseinstellung (X₁) bewertenden, lokalen Bewertungsfunktion (LBF) und mit einer eine Nichteinhaltung der gemeinsamen Einschränkung (ICR) bewertenden, weiteren Bewertungsfunktion (EBF), eingerichtet zum Ermitteln einer optimierten lokalen Betriebseinstellung (OLBE, X₁) durch:
- Optimieren der lokalen Bewertungsfunktion (LBF),
- Einlesen der ermittelten externen Betriebseinstellung (XA₁) und
- Optimieren der weiteren Bewertungsfunktion (EBF) abhängig von der eingelesenen externen Betriebseinstellung (XA₁) und von als Ergebnis (OLBE) des Optimierens der lokalen Bewertungsfunktion (LBF) aktualisierten Betriebseinstellungen (LBE), sowie
d) einem Steuermodul (SM) zum Einstellen der optimierten lokalen Betriebseinstellung (OLBE) im Produktionsmodul (PM).

2. Steuereinrichtung nach Anspruch 1, **dadurch gekennzeichnet, dass** das Optimierungsmodul (OPT) dazu eingerichtet ist,
- die Optimierung der lokalen Bewertungsfunktion (LBF), das Einlesen der ermittelten externen Betriebseinstellung (XA1) sowie die Optimierung der weiteren Bewertungsfunktion (EBF) in einer diese Schritte (1,2,3) umfassenden Schleife (S) zu wiederholen,
- bei einem jeweiligen Schleifendurchlauf ein lokales Abbruchkriterium zu prüfen und
- infolge einer Erfüllung des Abbruchkriteriums die Schleife (S) zu verlassen.

3. Steuereinrichtung nach Anspruch 2, **dadurch gekennzeichnet, dass** das Abbruchkriterium einen Schwellenwert für die Nichteinhaltung der gemeinsamen Einschränkung (ICR) umfasst.

4. Steuereinrichtung nach einem der vorhergehenden Ansprüche, **dadurch gekennzeichnet, dass** das Optimierungsmodul (OPT) dazu eingerichtet ist, die optimierte lokale Betriebseinstellung (OLBE, X₁) an das benachbarte Produktionsmodul weiterzuleiten.

5. Steuereinrichtung nach einem der vorhergehenden Ansprüche, **dadurch gekennzeichnet, dass** das Optimierungsmodul (OPT) dazu eingerichtet ist, die Ermittlung der optimierten lokalen Betriebseinstellung (OLBE, X₁) parallel zu einer korrespondierenden Ermittlung lokaler Betriebseinstellungen (XA₁) durch das benachbarte Produktionsmodul (PMA) durchzuführen, wobei fortlaufend lokale Betriebseinstellungen (X₁, XA₁) einer aktuellen Optimierungsphase mit dem benachbarten Produktionsmodul (PMA) ausgetauscht werden.

6. Steuereinrichtung nach einem der vorhergehenden Ansprüche, **dadurch gekennzeichnet, dass** der Datenspeicher (MEM) dazu eingerichtet ist, eine jeweilige Betriebseinstellung oder Einschränkung mit einer Kennung zum Identifizieren dieser Betriebseinstellung oder Einschränkung sowie mit einer Wertangabe, Bereichsangabe und/oder Vergleichsangabe zum Angeben dieser Betriebseinstellung oder Einschränkung zu speichern.

7. Steuereinrichtung nach einem der vorhergehenden Ansprüche, **dadurch gekennzeichnet, dass** das Einstellungsverwaltungsmodul (EM) dazu eingerichtet ist, durch Interaktion des Produktionsmoduls (PM) mit einem Produkt (P) und/oder mit einem benachbarten Produktionsmodul (PMA) bedingte Einschränkungen spezifisch zu erfassen und als interaktionsbedingte Einschränkungen (ICR) im Datenspeicher (MEM) zu speichern.

8. Steuereinrichtung nach einem der vorhergehenden Ansprüche, **dadurch gekennzeichnet, dass**
das Einstellungsverwaltungsmodul (EM) dazu eingerichtet ist, ein Produkt (P) und/oder ein benachbartes Produktionsmodul (PMA) dynamisch zu detektieren,
infolge einer solchen Detektion eine Änderungsinformation zu generieren und
die Änderungsinformation an das Optimierungsmodul (OPT) und/oder an ein benachbartes Produktionsmodul (PMA) zu übermitteln.

9. Steuereinrichtung nach Anspruch 8, **dadurch gekennzeichnet, dass** das Einstellungsverwaltungsmodul (EM) dazu eingerichtet ist, infolge der Detektion eine Erfassung von durch Interaktion des Produktionsmoduls (PM) mit dem Produkt (P) und/oder mit dem benachbarten Produktionsmodul (PMA) bedingten Einschränkungen (ICR) zu veranlassen.

10. Steuereinrichtung nach Anspruch 8 oder 9, **dadurch gekennzeichnet, dass** das Optimierungsmodul (OPT) dazu eingerichtet ist, infolge eines Empfangs einer Änderungsinformation die Optimierung der lokalen Bewertungsfunktion (LBF), das Einlesen der ermittelten externen Betriebseinstellung (XA₁) und/oder die Optimierung der weiteren Bewertungsfunktion (EBF) auszuführen.

11. Steuereinrichtung nach einem der vorhergehenden Ansprüche, **dadurch gekennzeichnet, dass** die lokale Bewertungsfunktion (LBF) und die weitere Bewertungsfunktion (EBF) mittels einer gemeinsamen Bewertungsfunktion implementiert sind, die mit einem veränderlichen Gewicht für die Bewertung der Nichteinhaltung der gemeinsamen Einschränkung (ICR) aufrufbar ist.

12. Steuereinrichtung nach einem der vorhergehenden Ansprüche, **dadurch gekennzeichnet, dass** das Optimierungsmodul (OPT) dazu eingerichtet ist, aufeinanderfolgende Optimierungen der weiteren Bewertungsfunktion (EBF) mit einem ansteigenden Gewicht für die Bewertung der Nichteinhaltung der gemeinsamen Einschränkung (ICR) auszuführen.

13. Produktionsmodul (PM, PMA) mit einer Steuereinrichtung (CTL) nach einem der vorhergehenden Ansprüche.

14. Verfahren zum Betreiben einer Steuereinrichtung (CTL) nach einem der Ansprüche 1 bis 12, wobei
a) Betriebseinstellungen (LBE) von Produktionsmodulen (PM, PMA) sowie Einschränkungen (LCR, ICR, ECR), die von zumindest einem Teil der Betriebseinstellungen einzuhalten sind, gespeichert werden,
b) ermittelt wird, von welcher externen Betriebseinstellung (XA₁) eines benachbarten Produktionsmoduls (PMA) eine lokale Betriebseinstellung (X₁) des Produktionsmoduls (PM) aufgrund einer gemeinsamen Einschränkung (ICR) abhängig ist,
c) anhand einer die lokale Betriebseinstellung (X₁) bewertenden, lokalen Bewertungsfunktion (LBF) und einer eine Nichteinhaltung der gemeinsamen Einschränkung (ICR) bewertenden, weiteren Bewertungsfunktion (EBF) eine optimierte lokale Betriebseinstellung (OLBE, X₁) ermittelt wird durch:
- Optimieren der lokalen Bewertungsfunktion (LBF),
- Einlesen der ermittelten externen Betriebseinstellung (XA₁) und
- Optimieren der weiteren Bewertungsfunktion (EBF) abhängig von der eingelesenen externen Betriebseinstellung (XA₁) und von als Ergebnis (OLBE) des Optimierens der lokalen Bewertungsfunktion (LBF) aktualisierten Betriebseinstellungen (LBE), sowie
d) die optimierte lokale Betriebseinstellung (OLBE) im Produktionsmodul (PM) eingestellt wird.

15. Computerprogrammprodukt für eine Steuereinrichtung (CTL) nach einem der Ansprüche 1 bis 12, eingerichtet zum Ausführen eines Verfahrens nach Anspruch 14.

16. Computerlesbares Speichermedium mit einem Computerprogrammprodukt nach Anspruch 15.

## Claims

1. Control device (CTL) for a production module (PM) in each case for machining or handling a product (P) in a production system having a multiplicity of production modules (PM, PMA), having
a) a data memory (MEM) for storing operational settings (LBE) of the production modules (PM, PMA) and restrictions (LCR, ICR, ECR) which must be complied with by at least some of the operational settings,
b) a settings management module (EM) for determining the external operational setting (XA₁) of an adjacent production module (PMA) on which a local operational setting (X₁) of the production module (PM) is dependent on account of a common restriction (ICR),
c) an optimization module (OPT) having a local assessment function (LBF), which assesses the local operational setting (X₁), and having a further assessment function (EBF), which assesses non-compliance with the common restriction (ICR), set up to determine an optimized local operational setting (OLBE, X₁) by:
- optimizing the local assessment function (LBF),
- reading in the determined external operational setting (XA₁), and
- optimizing the further assessment function (EBF) on the basis of the external operational setting (XA₁) which has been read in and operational settings (LBE) which have been updated as the result (OLBE) of the optimization of the local assessment function (LBF), and
d) a control module (SM) for setting the optimized local operational setting (OLBE) in the production module (PM).

2. Control device according to Claim 1, **characterized in that** the optimization module (OPT) is set up
- to repeat the optimization of the local assessment function (LBF), the reading-in of the determined external operational setting (XA₁) and the optimization of the further assessment function (EBF) in a loop (S) comprising these steps (1, 2, 3),
- to check a local abort criterion during a respective loop pass, and
- to leave the loop (S) on account of the abort criterion being satisfied.

3. Control device according to Claim 2, **characterized in that** the abort criterion comprises a threshold value for the non-compliance with the common restriction (ICR).

4. Control device according to one of the preceding claims, **characterized in that** the optimization module (OPT) is set up to forward the optimized local operational setting (OLBE, X₁) to the adjacent production module.

5. Control device according to one of the preceding claims, **characterized in that** the optimization module (OPT) is set up to determine the optimized local operational setting (OLBE, X₁) in a parallel manner with a corresponding determination of local operational settings (XA₁) by the adjacent production module (PMA), wherein local operational settings (X₁, XA₁) of a current optimization phase are continuously interchanged with the adjacent production module (PMA).

6. Control device according to one of the preceding claims, **characterized in that** the data memory (MEM) is set up to store a respective operational setting or restriction with an identifier for identifying this operational setting or restriction and with a value indication, a region indication and/or a comparison indication for indicating this operational setting or restriction.

7. Control device according to one of the preceding claims, **characterized in that** the settings management module (EM) is set up to specifically record restrictions caused by interaction of the production module (PM) with a product (P) and/or with an adjacent production module (PMA) and to store them as restrictions (ICR) caused by interaction in the data memory (MEM).

8. Control device according to one of the preceding claims, **characterized in that**
the settings management module (EM) is set up to dynamically detect a product (P) and/or an adjacent production module (PMA),
to generate an item of change information on account of such detection, and
to transmit the change information to the optimization module (OPT) and/or to an adjacent production module (PMA).

9. Control device according to Claim 8, **characterized in that** the settings management module (EM) is set up, on account of the detection, to initiate recording of restrictions (ICR) caused by interaction of the production module (PM) with the product (P) and/or with the adjacent production module (PMA).

10. Control device according to Claim 8 or 9, **characterized in that** the optimization module (OPT) is set up to optimize the local assessment function (LBF), read in the determined external operational setting (XA₁) and/or optimize the further assessment function (EBF) as a result of receiving an item of change information.

11. Control device according to one of the preceding claims, **characterized in that** the local assessment function (LBF) and the further assessment function (EBF) are implemented by means of a common assessment function which can be called with a variable weight for assessing the non-compliance with the common restriction (ICR).

12. Control device according to one of the preceding claims, **characterized in that** the optimization module (OPT) is set up to successively optimize the further assessment function (EBF) with an increasing weight for assessing the non-compliance with the common restriction (ICR).

13. Production module (PM, PMA) having a control device (CTL) according to one of the preceding claims.

14. Method for operating a control device (CTL) according to one of Claims 1 to 12, wherein
a) operational settings (LBE) of production modules (PM, PMA) and restrictions (LCR, ICR, ECR) which must be complied with by at least some of the operational settings are stored,
b) the external operational setting (XA₁) of an adjacent production module (PMA) on which a local operational setting (X₁) of the production module (PM) is dependent on account of a common restriction (ICR) is determined,
c) an optimized local operational setting (OLBE, X₁) is determined on the basis of a local assessment function (LBF), which assesses the local operational setting (X₁), and a further assessment function (EBF), which assesses non-compliance with the common restriction (ICR), by:
- optimizing the local assessment function (LBF),
- reading in the determined external operational setting (XA₁), and
- optimizing the further assessment function (EBF) on the basis of the external operational setting (XA₁) which has been read in and operational settings (LBE) which have been updated as the result (OLBE) of the optimization of the local assessment function (LBF), and
d) the optimized local operational setting (OLBE) is set in the production module (PM).

15. Computer program product for a control device (CTL) according to one of Claims 1 to 12 set up to carry out a method according to Claim 14.

16. Computer-readable storage medium having a computer program product according to Claim 15.

## Revendications

1. Dispositif de commande (CTL) d'un module de production (PM) respectif pour traiter ou manipuler un produit (P) dans un système de production présentant une pluralité de modules de production (PM, PMA), comprenant
a) une mémoire de données (MEM) pour mettre en mémoire des paramètres de fonctionnement (LBE) des modules de production (PM, PMA) ainsi que des limitations (LCR, ICR, ECR) qui doivent être respectées par au moins une partie des paramètres de fonctionnement,
b) un module de gestion de paramètres (EM) pour déterminer, de quel paramètre de fonctionnement externe (XA₁) d'un module de production (PMA) voisin dépend un paramètre de fonctionnement local (X₁) du module de production (PM) en raison d'une limitation (ICR) commune,
c) un module d'optimisation (OPT) comprenant une fonction d'évaluation locale (LBF) évaluant le paramètre de fonctionnement local (X₁) et comprenant une fonction d'évaluation supplémentaire (EBF) évaluant un non-respect de la limitation (ICR) commune, conçu pour déterminer un paramètre de fonctionnement local (OLBE, X₁) optimisé par :
- optimisation de la fonction d'évaluation locale (LBF),
- lecture du paramètre de fonctionnement externe (XA₁) déterminé et
- optimisation de la fonction d'évaluation supplémentaire (EBF) en fonction du paramètre de fonctionnement externe (XA₁) lu et de paramètres de fonctionnement (LBE) actualisés en tant que résultat (OLBE) de l'optimisation de la fonction d'évaluation locale (LBF), ainsi que
d) un module de commande (SM) pour paramétrer le paramètre de fonctionnement local (OLBE) optimisé dans le module de production.

2. Dispositif de commande selon la revendication 1, **caractérisé en ce que** le module d'optimisation (OPT) est conçu pour
- répéter l'optimisation de la fonction d'évaluation locale (LBF), la lecture du paramètre de fonctionnement externe (XA₁) déterminé ainsi que l'optimisation de la fonction d'évaluation supplémentaire (EBF) dans une boucle (S) comprenant ces trois étapes (1, 2, 3),
- vérifier un critère d'interruption local sur un passage respectif de la boucle et
- quitter la boucle (S) à la suite d'un remplissage du critère d'interruption.

3. Dispositif de commande selon la revendication 2, **caractérisé en ce que** le critère d'interruption comprend une valeur seuil pour le non-respect de la limitation (ICR) commune.

4. Dispositif de commande selon l'une des revendications précédentes, **caractérisé en ce que** le module d'optimisation (OPT) est conçu pour transmettre le paramètre de fonctionnement local (OLBE, X₁) optimisé au module de production voisin.

5. Dispositif de commande selon l'une des revendications précédentes, **caractérisé en ce que** le module d'optimisation (OPT) est conçu pour exécuter la détermination du paramètre de fonctionnement local (OLBE, X₁) optimisé parallèlement à une détermination correspondante de paramètres de fonctionnement locaux (XA₁) par le module de production (PMA) voisin, dans lequel des paramètres de fonctionnement locaux (X₁, XA₁) d'une phase d'optimisation actuelle sont échangés en continu avec le module de production (PMA) voisin.

6. Dispositif de commande selon l'une des revendications précédentes, **caractérisé en ce que** la mémoire de données (MEM) est conçue pour mettre en mémoire un paramètre de fonctionnement respectif ou une limitation respective avec un identifiant pour identifier ce paramètre de fonctionnement ou cette limitation ainsi qu'avec une indication de valeur, une indication de plage et/ou une indication de comparaison pour indiquer ce paramètre de fonctionnement ou cette limitation.

7. Dispositif de commande selon l'une des revendications précédentes, **caractérisé en ce que** le module de gestion de paramètres (EM) est conçu pour, par interaction du module de production (PM) avec un produit (P) et/ou avec un module de production (PMA) voisin, détecter spécifiquement et mettre dans la mémoire de données (MEM), en tant que limitations (ICR) conditionnées par l'interaction, des limitations conditionnées.

8. Dispositif de commande selon l'une des revendications précédentes, **caractérisé en ce que** le module de gestion de paramètres (EM) est conçu pour détecter de façon dynamique un produit (P) et/ou un module de production (PMA) voisin,
générer une information de modification à la suite d'une telle détection et
transmettre l'information de modification au module d'optimisation (OPT) et/ou à un module de production (PMA) voisin.

9. Dispositif de commande selon la revendication 8, **caractérisé en ce que** le module de gestion de paramètres (EM) est conçu pour, à la suite de la détection, déclencher une saisie de limitations (ICR) conditionnées par l'interaction du module de production (PM) avec le produit (P) et/ou avec le module de production (PMA) voisin.

10. Dispositif de commande selon la revendication 8 ou 9, **caractérisé en ce que** le module d'optimisation (OPT) est conçu pour, à la suite d'une réception d'une information de modification, exécuter l'optimisation de la fonction d'évaluation locale (LBF), la lecture du paramètre de fonctionnement externe (XA₁) déterminé et/ou l'optimisation de la fonction d'évaluation supplémentaire (EBF).

11. Dispositif de commande selon l'une des revendications précédentes, **caractérisé en ce que** la fonction d'évaluation locale (LBF) et la fonction d'évaluation supplémentaire (EBF) sont implémentées au moyen d'une fonction d'évaluation commune qui peut être appelée avec un poids modifiable pour l'évaluation du non-respect de la limitation (ICR) commune.

12. Dispositif de commande selon l'une des revendications précédentes, **caractérisé en ce que** le module d'optimisation (OPT) est conçu pour exécuter des optimisations consécutives de la fonction d'évaluation supplémentaire (EBF) avec un poids croissant pour l'évaluation du non-respect de la limitation (ICR) commune.

13. Module de production (PM, PMA) comprenant un dispositif de commande (CTL) selon l'une des revendications précédentes.

14. Procédé d'exploitation d'un dispositif de commande (CTL) selon l'une des revendications 1 à 12, dans lequel
a) des paramètres de fonctionnement (LBE) de modules de production (PM, PMA) ainsi que des limitations (LCR, ICR, ECR) qui doivent être respectées par au moins une partie des paramètres de fonctionnement sont mis en mémoire,
b) il est déterminé de quel paramètre de fonctionnement externe (XA₁) d'un module de production (PMA) voisin dépend un paramètre de fonctionnement local (X₁) du module de production (PM) en raison d'une limitation (ICR) commune,
c) à l'aide d'une fonction d'évaluation locale (LBF) évaluant le paramètre de fonctionnement local (X₁) et d'une fonction d'évaluation supplémentaire (EBF) évaluant un non-respect de la limitation (ICR) commune, un paramètre de fonctionnement local (OLBE, X₁) optimisé est déterminé par :
- optimisation de la fonction d'évaluation locale (LBF),
- lecture du paramètre de fonctionnement externe (XA₁) déterminé et
- optimisation de la fonction d'évaluation supplémentaire (EBF) en fonction du paramètre de fonctionnement externe (XA₁) lu et de paramètres de fonctionnement (LBE) actualisés en tant que résultat (OLBE) de l'optimisation de la fonction d'évaluation locale (LBF), ainsi que
d) le paramètre de fonctionnement local (OLBE) optimisé est paramétré dans le module de production (PM).

15. Produit de programme informatique pour un dispositif de commande (CTL) selon l'une des revendications 1 à 12 conçu pour exécuter un procédé selon la revendication 14.

16. Support de stockage lisible sur ordinateur comprenant un produit de programme informatique selon la revendication 15.
